# EUROPEAN PATENT APPLICATION

(11) **EP 4 484 464 A1**
(43) Date of publication of application: **01.01.2025**
(21) Application number: 24182460.6
(22) Date of filing: 17.06.2024
(51) Int. Cl.: C08G 69/26, C08G 69/34, C08G 69/40, C08G 69/48, C08G 71/04, C08K 3/36, C08L 67/06, C08L 77/06, C09D 167/06

(54) **POLYETHERAMIDE SYNERGIST**

(30) Priority: 27.06.2023 EP 23181738; 19.04.2024 EP 24171174
(71) Applicant: Evonik Operations GmbH, 45128 Essen (DE)
(72) Inventor: Cortes Baledon, Francisco, Allentown, PA, 18101 (US); Cao, Bin, Berwyn, PA, 19312 (US); Cheng, Shenglan, 561591 Singapore (SG); Liu, Kerh Li, 768008 Singapore (SG)
(74) Representative: Evonik Patent Association

(57) **Abstract**

Organic polymer of the structure (AₘBₙ)-(C)ₓ in which A is a polycarboxylic acid with two or more carboxylic groups, B is polyamine with two or more amine groups, m ≥ 1, n ≥ 1 and x = 2-6; C has the structure F(D)_{y} in which F is a urethane, amide and/or ester functional group, D is a C₂ to C₁₈ moiety with at least one primary, secondary and/or tertiary hydroxyl group(s) and y = 1-6, characterized in that AₘBₙ comprises 3 or more alkylene oxide units and 1 or more ethylene oxide units.

## Description

The present invention relates to organic polymers that can enhance the thixotropic effect of class of silica based rheology modifiers, the production of such polymers and their use in solvent-based coating formulations.

Such polymers that can increase the thixotropic effect of silica based rheology modifiers are also called synergists as they are used together with silica based rheology modifiers.

Silica particles are used as rheology modifier in coating formulations. They are effective in increasing low-shear viscosity and are widely used to improve sag resistance of a coating during the application process. Such effect is contributed by non-covalent interaction amongst silica particles and with other ingredients in a coating formulation, especially through hydrogen bonding interactions. The non-covalent interaction is disrupted under high-shear conditions but rebounds when shear force is removed or reduced. This feature is also known as thixotropic effect and it is essential for ease of coating application which happens at high shear and sag reduction after the application process. Sag reduction relies on quick viscosity rebound when shear force is removed. Typically, the effect can be enhanced by increasing the dosage of silica particles, i.e., higher low-shear viscosity and quicker viscosity rebound. However, the higher loading of silica particles often leads to poor in-can stability as manifested by settling of silica particles as well as adversely affect final coating properties such as gloss and transparency. Moreover, the speed at which the viscosity rebounds after high shear may not be well correlated with a high low-shear viscosity. A quick rebound time is required to improve sag behaviour of the applied coating composition.

US 4,857,111 discloses hydroxyfunctional polycarboxylic acid amide as a synergist to improve the thixotropic effect of silica particles in solvent-based coating formulations. The disclosed structure may be a polymer with 2 to 18 hydroxyl groups linked to a backbone through amide bonds. The backbone may be polyamide with 2, 4, 6 or 8 amide groups or the backbone may be a polyether. After high shear stress e.g. by brushing or spraying, however, the rebound to return to the original viscosity is not quick enough to effectively prevent sag.

US 2010 0323112 A1 discloses the use of hydroxy functional amide compounds in conjunction with silica and 1 wt% - 7 wt% of total coating formula of volatile organic liquids (i) having an evaporation rate less than or equal to 0.1 and (ii) in which the hydroxy-functional amide compound is insoluble, to achieve anti-sag properties. The disclosed structure may be a polymer with 2 to 18 hydroxyl groups linked to a backbone through amide bonds. The backbone includes a polyamide chain with 2, 4, 6 or 8 amide groups or polyether. Similar to US 4,857,111 with insoluble hydroxy functional amide compound anti sag behaviour is still not satisfactory in addition to the required volatile organic liquids that limit the choice of solvents that can be used for the coating composition.

US 9,822,234 disclosed a thixotropy-increasing additive produced from the condensation of (a) polyalkylenepolyamine which can form at least one imidazoline and/or tetrahydropyrimidine unit and which has at least two primary amino groups or at least one primary and at least one secondary amino group with (b) dimerized fatty acid, trimerized fatty acid or their mixture, or reaction product of at least two dimerized or trimerized fatty acids or their mixture with at least one polyamine having at least two primary amino groups. While the proposed additive can increase thixotropy as compared with not adding the additive sag behaviour can still be improved.

WO 2021/185898 A1 discloses a rheology control agent comprising silica and polyethyleneimine with a molecular weight in the range of 40000 to 300000 g/mol that is further reacted with epoxide compounds. Polyethyleneimine, however, is an expensive additive with very limited commercial availability. Furthermore, the production process involves handling of toxic substances.

WO 2021/008954 A1 discloses a composition comprising organically modified silica and an organic compound with both amine and hydroxyl groups. The organic compounds were produced from epoxide ring opening reaction of amine mixtures containing 2-amino-2-hydroxymethyl-1 ,3-propanediol (TRIS) and glycidyl ethers. The proposed compounds require an amine equivalent weight of less than 5000 which is not desirable with regard to environmental toxicity.

US2007/225451 discloses biuret compounds as rheology control additives.

It is therefore an object of the present invention to provide an organic polymer that works synergistically together with silica particles as a rheology modifier for coating compositions to improve the rheological performance of the coating composition and which can at least reduce the disadvantages of the prior art molecules that are used together with silica particles to modify the rheology of a coating composition. It is another object of the present invention that the organic polymer can increase the low-shear viscosity of solvent-based coating compositions in conjunction with silica particles and that it imparts fast viscosity rebound after exposure of the coating composition to high shear and thereby enhance sag behaviour of the coating composition.

This object is achieved by an organic polymer of the following structure I

(AₘBₙ)-(C)ₓ (I)

in which A is a polycarboxylic acid with two or more carboxylic groups or its anhydrides, esters or acid halides and mixtures thereof,
B is polyamine with two or more amine groups,
m, n and x are molar ratios with m ≥ 1, n ≥ 1 and x = 2-6;
C has the following structure II

F(D)_{y} (II)

in which F is a urethane, amide and/or ester functional group, D is a C₂ to C₁₈ moiety with at least one primary, secondary and/or tertiary hydroxyl group and y = 1-6,
characterized in that AₘBₙ is a polyetheramide that comprises three or more alkylene oxide units and that at least one of the alkylene oxide units is an ethylene oxide unit. The alkylene oxide units can optionally be substituted ones and being derived from glycidyl ether functionality.

The organic polymer according to the invention is used together with silica particles as a rheology modifier for solvent-based coating compositions. Surpisingly it was found that the organic polymer according to the invention increases the low-shear viscosity of solvent-based coating compositions in conjunction with silica particles and imparts fast viscosity rebound after exposure of the coating composition to high shear and thereby enhances sag behaviour of the coating composition.

The organic polymer according to the invention allows to avoid having to increase silica loading of a coating composition to improve the rheology of the coating composition and thereby prevents the negative effects of higher silica loading which are poor in-can stability by settling of the silica particles as well as adversely affecting the final coating properties such as gloss and transparency.

Component A is a polycarboxylic acid or its anhydrides, esters or acid halides and mixtures thereof. The term "polycarboxylic acid" as used herein means an organic acid containing two or more carboxylic groups and preferably no other functional groups. Most preferably, the carboxylic groups are attached to a hydrocarbon moiety.

Polycarboxylic acid (A) and polyamine (B) are linked by an amide bond. The amide bond is formed from the condensation of a carboxylic group from polycarboxylic acid (A) with an amine group from polyamine (B). Therefore (AₘBₙ) is a polyetheramide.

According to the present invention a polyetheramide (AₘBₙ) comprising at least one ethylene oxide unit and hydroxyl functionalities is required to achieve the desired performance. The hydroxyl functionalities could be attached to the polyetheramide via ester and urethane linkages, in addition to amide. The polyetheramide (AₘBₙ) is formed by reacting polycarboxylic acid (A) and polyamine (B) in m/n molar ratio. Polyether segment comprising at least one ethylene oxide unit is incorporated into the polyetheramide through the use of polycarboxylic acid with polyether segment and/or polyamine with polyether segment. The resultant polyetheramide is then reacted with x mol of an amine reactive pre-cursor or a carboxylic acid reactive pre-cursor, resulting in (AₘBₙ)-(C)ₓ where C comprises hydroxy containing moiety (D) and ester, amide and/or urethane linkages (F).

D is preferably an alcohol or an alcohol and amine substituted C₂ to C₁₈ hydrocarbon.

The organic polymer according to the present invention does not require the use of volatile organic liquids in the coating composition as required by US 2010/0323112 A1 to achieve desired anti-sag properties.

To address shortcomings arising from the limited amount of silica that can be used in solvent-based coating compositions, organic polymers that can form non-covalent interactions with silica particles are suggested in the prior art to further improve the rheological performance.

Such a prior art polymer typically has a hydrophobic polyamide backbone that leads to partial solubility in the coating system and components that interact with silica particles such as hydroxyl groups (US 4,857,111) or imidazoline and/or tetrahydropyrimidine units (US 9,822,234). The partial solubility induced by hydrophobic polyamide can lead to viscosity enhancement. However, as shown in the Examples below there is still room for better performance in terms of viscosity rebound after removal of high-shear.

It is a very unexpected finding that the organic polymer according to the invention which constitutes a polyetheramide is capable of enhancing the low-shear viscosity of a silica-containing solvent-based coating formulation and at the same time and imparts fast viscosity rebound after exposure of the coating composition to high shear. Incorporation of a polyether segment, especially those containing polar ethylene oxide units, should increase the polymer solubility in a solvent-based coating composition and thus reduce the effectiveness of the polymer for enhancing rheological properties of the coating. Surprisingly it could be shown, however, that the organic polymer according to the invention which constitutes a polyetheramide is capable of enhancing the low-shear viscosity of a silica-containing solvent-based coating composition and impart fast viscosity rebound after exposure of the coating composition to high shear and thereby enhancing sag behaviour.

The term alkylene oxide unit in AₘBₙ means the reaction product of the alkylene oxide.

Indices m, n, x and y are preferably integers.

In the organic polymer according to the present invention having the structure (AₘBₙ)-(C)ₓ , component A is preferably an aliphatic or aromatic polycarboxylic acid with two or three carboxylic groups or their anhydrides, esters or acid halides and mixtures thereof. Always provided that either component A or component B or both comprise three or more alkylene oxide units and at least one of the alkylene oxide units in A or B is an ethylene oxide unit.

A can be a dimerized fatty acid or a trimerized fatty acid or mixture of both. Such dimerized or trimerized fatty acids are preferably produced from unsaturated fatty acids with 12 to 22 carbons, more peferably from tall oil having 18 carbons. The dimerized or trimerized fatty acids can be optionally hydrogenated. Always provided that AₘBₙ formed from components A and B comprises three or more alkylene oxide units and that at least one of the alkylene oxide units is an ethylene oxide unit.

More preferably, in the organic polymer according to the invention A is an aliphatic or aromatic polycarboxylic acid with two carboxyl groups. Most preferably A is selected from the group consisting of oxalic acid, diethyl oxalate, oxalyl chloride, succinic acid, succinic anhydride, oct(en)yl-, dec(en)yl- and dodec(en)ylsuccinic anhydride, fumaric acid, diethyl fumarate, maleic acid, maleic anhydride, diethyl maleate, glutaric acid, glutaric anhydride, adipic acid, adipic anhydride, diglycolic acid, pimelic acid, suberic acid, azelaic acid, sebacic acid, decanedicarboxylic acid, dimerized fatty acids, mesaconic acid, malonic acid, itaconic acid, itaconic anhydride, citraconic acid, citraconic anhydride, hexahydro-, tetrahydro-, dihydro-, methylhexahydro- and methyltetrahydrophthalic acid, hexahydro-, tetrahydro-, dihydro-, methylhexahydro- and methyltetrahydrophthalic anhydride, 1,4- cyclohexanedicarboxylic acid, tetrahydrophthalic acid, phthalic acid, phthalic anhydride, isophthalic acid, terephthalic acid, dimethyl terephthalate, naphthalene dicarboxylic acid, naphthalene anhydride, 3,6,9-trioxaundecanedioic acid, poly(ethylene glycol) bis(carboxymethyl) ether, α,ω-Bis[2-[(3-carboxy-1-oxopropyl)amino]ethyl]-poly(ethylene glycol) and mixtures thereof.

In another preferred embodiment of the organic polymer according to the invention A is an aliphatic or aromatic polycarboxylic acid with three carboxylic groups or their anhydrides, esters or acid halides and mixtures thereof. If A is an aliphatic or aromatic polycarboxylic acid with three carboxylic groups then more preferably A is selected from the group consisting of tricarballylic acid, butane tricarboxylic acid, trimesic acid, trimellitic acid, trimellitic anhydride, trimerized fatty acid (trimer acid), 3-arm poly(ethylene glycol) carboxylic acid; Tris[2-[(3-carboxy-1-oxopropyl)amino]ethyl]-poly(ethylene glycol) and mixtures thereof.

In the organic polymer according to the present invention having the structure(AₘBₙ)-(C)ₓ, component B is preferably an aliphatic or aromatic polyamine with two to six amine groups. Always provided that either component A or component B or both comprise three or more alkylene oxide units and at least one of the alkylene oxide units in A or B is an ethylene oxide unit.

More preferably B is an aliphatic or aromatic polyamine selected from the group consisting of ethylene diamine, propylene diamine, hexamethylene diamine, methylpentane diamine, isophorone diamine, cyclohexanediamine, xylenediamine, 4,4-diaminodicyclohexylmethane, octamethylenediamine, 1,12-dodecanediamine, dimerdiamine, trioxatridecanediamine, polyether diamine or triamine, poly(oxyethylene)diamine, poly(oxypropylene)diamine, poly(oxyethylene-oxypropylene)diamine, glyceryl poly(oxypropylene) triamine, diethylenetriamine, triaminononane, triethylenetetramine, tetraethylenepentamine, pentaethylenehexamine, bishexamethylenetriamine, bisaminopropylpiperazine and mixtures thereof. Most preferably B is a polyetherdiamine with one or more ethylene oxide repeating units.

Components A and B are reacted to form AₘBₙ. The selection of A and B has to be made such that AₘBₙ has the required alkylene oxide units and ethylene oxide units according to the invention.

Component C of the organic polymer according to the invention is composed of a urethane or amide and/or ester functional group (F) and moiety D with D containing at least one primary and/or secondary and/or tertiary hydroxyl group. It has the structure F(D)_{y}. F acts as a linker between D and AₘBₙ. C is the chain end segment of the organic polymer according to the invention.

C can be obtained by reacting an amine reactive pre-cursor with the amine groups present in (AₘBₙ) to form (AₘBₙ)-(C)ₓ having at least one primary or secondary or tertiary hydroxyl group in the C part.

Preferably the amine reactive pre-cursor is selected from the group consisting of lactic acid, glycolic acid, dimethylol propionic acid, salicylic acid, malic acid, citric acid, isocitric acid, mandelic acid, tartronic acid, tartaric acid, hydroxybutyric acid, hydroxypentanoic acid, hydroxyhexanoic acid, hydroxystearic acid, ricinoleic acid, caprolactone, valerolactone, butyrolactone, lactides, or mixtures thereof. When the pre-cursor is a hydroxyacid, lactone or a lactide it forms an amide with AₘBₙ in which case F is an amide functional group and D is a C₂ to C₁₈ moiety with at least one primary, secondary and/or tertiary hydroxyl group as required according to the invention.

In another preferred embodiment according to the invention the amine reactive pre-cursor is a carbonate that is preferably selected from the group consisting of ethylene carbonate, propylene carbonate and glycerol carbonate. When pre-cursor is a carbonate it forms urethane with the amine present in AₘBₙ in which case F is a urethane functional group and D is a C₂ to C₁₈ moiety with at least one primary, secondary and/or tertiary hydroxyl group as required according to the invention.

In yet another preferred embodiment of the invention C is obtained by reacting a carboxylic acid-reactive pre-cursor with the carboxyl groups present in (AₘBₙ) to form (AₘBₙ)-(C)ₓ, provided that the pre-cursor contains at least one primary or secondary or tertiary hydroxyl group in addition to the carboxylic acid-reactive group. The carboxylic acid-reactive pre-cursor is preferably an aminoalcohol. When the pre-cursor is an aminoalcohol it forms an amide or ester with the carboxyl acid groups present in AₘBₙ. F is then either an amide and/or an ester functional group. The aminoalcohol is selected such that D is a C₂ to C₁₈ moiety with at least one primary, secondary and/or tertiary hydroxyl group as required according to the invention.

More preferably the carboxylic acid-reactive pre-cursor is selected from the group consisting of diethanolamine, tris(hydroxymethyl)aminomethane and epoxy-amine adducts that have at least one secondary amine and mixtures thereof.

The thus formed moiety C could be further expanded by reacting the hydroxyl groups present in C with lactones or lactides. The expansion preferably does not change the number of hydroxyl groups in moiety C.

The reaction of polycarboxylic acid A and polyamine B is a polycondensation reaction that forms an alternating sequence of A and B along the polyetheramide backbone.

A preferred embodiment of the invention is an organic polymer of structure I

(AₘBₙ)-(C)ₓ (I)

in which A is a dimerized fatty acid, B is polyamine with two or more amine groups, m ≥ 1, n ≥ 1 and x = 2-6;
C has the following structure II

F(D)_{y} (II)

in which F is a urethane, amide and/or ester functional group, D is a C₂ to C₁₈ moiety with at least one primary, secondary and/or tertiary hydroxyl group and y = 1-6,
provided that AₘBₙ comprises three or more alkylene oxide units and that at least one of the alkylene oxide units is an ethylene oxide unit.

Another preferred embodiment of the invention is an organic polymer of structure I

(AₘBₙ)-(C)ₓ (I)

in which A is a polycarboxylic acid with two or more carboxylic groups, B is a polyether diamine or a polyether triamine, m ≥ 1, n ≥ 1 and x = 2-6;
C has the following structure II

F(D)_{y} (II)

in which F is a urethane, amide and/or ester functional group, D is a C₂ to C₁₈ moiety with at least one primary, secondary and/or tertiary hydroxyl group and y = 1-6,
provided that AₘBₙ comprises three or more alkylene oxide units and that at least one of the alkylene oxide units is an ethylene oxide unit.

Another preferred embodiment of the invention is an organic polymer of structure I

(AₘBₙ)-(C)ₓ (I)

in which A is a dimerized fatty acid, B is a polyether diamine or a polyether triamine, m ≥ 1, n ≥ 1 and x = 2-6; C has the following structure II

F(D)_{y} (II)

in which F is a urethane, amide and/or ester functional group, D is a C₂ to C₁₈ moiety with at least one primary, secondary and/or tertiary hydroxyl group and y = 1-6, provided that AₘBₙ comprises three or more alkylene oxide units and that at least one of the alkylene oxide units is an ethylene oxide unit.

The present invention also encompasses a process for producing an organic polymer according to the invention. Such process comprising the steps of reacting polycarboxylic acid A and polyamine B to form AₘBₙ at a temperature of 140°C to 200°C for a period of 4-8 hours and subsequently reacting the thus formed AₘBₙ with a pre-cursor of C as described above at a temperature of 140°C to 180°C for another 4-8 hours or at a temperature of 100°C to 150°C for a further 4-8 hours if the pre-cursor of C is a carbonate.

Most advantageously the organic polymer according to the invention is added to a solvent-based coating composition. Therefore, the invention also encompasses a solvent-based coating composition comprising the organic polymer according to the invention, a solvent-based resin system and hydrophilic or hydrophobic silica particles. The solvent-based coating composition can be clear coat or it can additionally contain pigments, binders, fillers and other additives.

The solvent-based coating composition according to the invention preferably comprises
0.1 wt% - 10 wt% of an organic polymer according to any one of claims 1 to 12,
60 wt% - 98 wt% of a solvent-based resin system and
0.1 wt% - 10 wt% of hydrophilic or hydrophobic silica particles,
0 wt% - 30 wt % pigments, binders, fillers,
provided that the sum of all components equals 100 wt%.

The skilled person can choose from a large variety of solvents for the solvent-based resin system depending on the resin and the components of the organic polymer of the invention. Suitable solvents may be ketones, e.g. acetone, methyl ethyl ketone, methyl isobutyl ketone, methyl amyl ketone; aromatic hydrocarbons e.g. toluene, xylene, styrene, A100, P100; mineral spirits; ethyl acetate, butyl acetate, propylene glycol methyl ether acetate; glycol ethers e.g. diethylene glycol dimethyl ether, di(propylene glycol) methyl ether; dibasic esters and alcohols. Preferably the solvent is selected from the group consisting of aromatic hydrocarbons and ketones.

The resin for the solvent-based resin system can be selected from acrylic, polyurethane, polyester, epoxy, polyaspartic, phenolic and alkyd resin. Preferably resin for the solvent-based resin system is selected from the group consisting of acrylic, polyurethane, polyester or epoxy resin.

A process for coating a surface also forms part of the present invention. Such a process comprises the steps of providing a solvent-based coating composition as described above, said solvent-based coating composition comprising the organic polymer according to the invention and hydrophilic or hydrophobic silica particles, applying said solvent-based coating composition at least partially onto a surface and drying or curing the coating composition. Applying onto a surface can be done by any manner known to the skilled person, e.g. by dipping, brushing or spraying.

### Examples

### Example 1 - Synthesis of Synergist S1

C36 dimer acid (Component A) and polyether diamine with 9 ethylene oxide units and a molecular weight around 600 g/mol (Component B) were mixed and reacted at a temperature of 150 to 200°C, for a period of 4-8 hours. Water of condensation was removed. When the amine value of the reaction mixture was ≤ 5 mgKOH/g, the reaction mixture was subsequently cooled to 60-90°C and diethanolamine (DEA - pre-cursor to Component C) added. The mixture was heated to 140 to 180°C for a further 4-8 hours. The reaction mixture was then cooled to 60-90°C when its acid value dropped to ≤ 10 mg KOH/g and solvent mixture of xylene and P100(naphtha, light aromatic fraction) and isobutanol was added. The molar ratio of reactants used is shown in Table 1. The solvent is used to reduce the viscosity of the material.

The acid value was determined according to ASTM D1639-90. The amine value was determined according to ASTM D2074-07(2019). The molecular weight *M*ₙ, *M*_{w}, was determined according to ASTM D5296-19. *Mₙ* is the number averaged molecular weight and *M_{w}* is the weight averaged molecular weight. Then non-volatile content (NV) was determined according to ASTM D2369-20

### Example 2 - Synthesis of Synergist S2

Synergist S2 was obtained in a similar fashion as shown in Example 1 but with a different molar ratio of reactants, as shown in Table 1.

### Example 3 - Synthesis of Synergist S3

Synergist S3 was obtained in similar fashion as shown in Example 1 with the difference in reactant ratios and that as Component B a polyether diamine that has 13 ethylene oxide units was used, as shown in Table 1.

### Example 4- Synthesis of Synergist S4

Synergist S4 was obtained in similar fashion as shown in Example 1 with the difference in reactant ratios and that as Component B a polyether diamine that has no ethylene oxide units was used, as shown in Table 1. S4 serves as comparative example.

### Example 5 - Synthesis of Synergist S5

Synergist S5 was obtained in a similar fashion as shown in Example 1 with the difference in reactant ratios and with tris(hydroxymethyl)aminomethane (TRIS) as pre-cursor to C, as shown in Table 1.

### Example 6 - Synthesis of Synergist S6

Synergist S6 was obtained in similar fashion as shown in Example 1 with the difference in reactant ratios and that as Component B a polyether diamine that has 39 ethylene oxide units and tris(hydroxymethyl)aminomethane (TRIS) as pre-cursor to C were used.

### Example 7- Synthesis of Synergist S7

Synergist S7 was obtained in similar fashion as shown in Example 1 with the difference in reactant ratios and that as Component B a polyether diamine that has no ethylene oxide units and tris(hydroxymethyl)aminomethane (TRIS) as pre-cursor to C were used, as shown in Table 1. S7 serves as comparative example.

### Example 8- Synthesis of Synergist S8

C36 dimer acid (Component A) and polyether diamine with 9 ethylene oxide units and a molecular weight around 600 g/mol (Component B) were mixed and reacted at a temperature of 150 to 200°C, for a period of 4-8 hours. Water of condensation was removed. When the acid value of the reaction mixture dropped to ≤ 6 mgKOH/g the reaction mixture was subsequently cooled to 60-90°C and glycerol carbonate (GC - pre-cursor to Component C) was added. The mixture was heated to 130 to 160°C for a further 4-8 hours, until amine value decreased to ≤12 mgKOH/g. The reaction mixture was then cooled to 50°C and diluted with xylene. The molar ratio of reactants used is shown in Table 1.

### Example 9- Synthesis of Synergist S9

Synergist S9 was obtained in similar fashion as shown in Example 8 with the only difference that as Component B a polyether diamine that has no ethylene oxide units was used, as shown in Table 1. S9 serves as comparative example.

### Example 10- Synthesis of Synergist S10

Synergist S10 was obtained in a similar fashion as shown in Example 8 but with a different molar ratio of reactants, as shown in Table 1.

### Example 11- Synthesis of Synergist S11

Synergist S11 was obtained in a similar fashion as shown in Example 8 with the difference in reactant ratios and that as Component B a polyether diamine that has 39 ethylene oxide units was used, as shown in Table 1.

### Example 12- Synthesis of Synergist S12

Synergist S12 was obtained in a similar fashion as shown in Example 8 with the difference in reactant ratios and that as Component B a polyether diamine that has 39 ethylene oxide units was used, as shown in Table 1.

### Example 13- Synthesis of Synergist S13

Synergist S13 was obtained in a similar fashion as shown in Example 8 with the difference in reactant ratios and that as Component A a C42 trimer acid and Component B a polyether diamine that has 39 ethylene oxide units were used, as shown in Table 1.

**Table 1: Composition and properties of synergists S1 to S13 prepared as described in Examples 1 to 13.**

| Synergist | A | B | Pre-cursor to C | Molar ratio m : n : x | *M*ₙ (Da) | *M*_{W} (Da) | NV (%) | Acid value (mg KOH/g) | Amine value (mg KOH/g) |
|---|---|---|---|---|---|---|---|---|---|
| S1 | Dimer acid | PEA1 | DEA | 2:1:2 | 4700 | 8850 | 61 | 5.9 | 9.8 |
| S2 | Dimer acid | PEA1 | DEA | 3:2:2 | 7300 | 14300 | 52 | 3.4 | 6.1 |
| S3 | Dimer acid | PEA2 | DEA | 3:2:2 | 15530 | 37830 | 54 | 5.5 | 13.9 |
| S4 | Dimer acid | PEA3 | DEA | 3:2:2 | 6600 | 13150 | 53 | 7.6 | 30.8 |
| S5 | Dimer acid | PEA1 | TRIS | 3:2:2 | 7350 | 14850 | 52 | 6.0 | 28.7 |
| S6 | Dimer acid | PEA4 | TRIS | 11:10:2 | 12430 | 20930 | 52 | 5.2 | 2.5 |
| S7 | Dimer acid | PEA3 | TRIS | 11:10:2 | 13570 | 25290 | 55 | 3.0 | 4.0 |
| S8 | Dimer acid | PEA1 | GC | 1:2:2 | 5350 | 9140 | 54 | 1.1 | 2.4 |
| S9 | Dimer acid | PEA3 | GC | 1:2:2 | 4470 | 8040 | 54 | 0.9 | 4.8 |
| S10 | Dimer acid | PEA1 | GC | 2:3:2 | 8100 | 14580 | 60 | 1.0 | 4.5 |
| S11 | Dimer acid | PEA4 | GC | 5:6:2 | 8380 | 20070 | 60 | 0.8 | 3.4 |
| S12 | Dimer acid | PEA4 | GC | 10:11:2 | 9620 | 19360 | 54 | 1.5 | 3.0 |
| S13 | Trimer acid | PEA4 | GC | 1:3:3 | 7240 | 14300 | 54 | 1.2 | 4.4 |

| | | | | | | | | | |
|---|---|---|---|---|---|---|---|---|---|
| *m, n and x represent molar ratio of A, B and C in the obtained synergists S1 to S13 with the structure (AₘBₙ)-(C)ₓ Dimer acid: C36 dimer acid Trimer acid: C42 trimer acid PEA1 - polyether diamine with 9 ethylene oxide units, molecular weight around 600 g/mol PEA2 - polyether diamine with 13 ethylene oxide unit, molecular weight around 900 g/mol PEA3 - polyether diamine with no ethylene oxide unit, molecular weight around 230 g/mol PEA4 - polyether diamine with 39 ethylene oxide unit, molecular weight around 2000 g/mol DEA - Diethanolamine (Sigma-Aldrich) TRIS - Tris(hydroxymethyl)aminomethane (Sigma-Aldrich) GC - Glycerol carbonate (Huntsman) | | | | | | | | | |

### Example 14 - Preparation of solvent based unsaturated polyester coating composition

Solvent based unsaturated polyester coating compositions A-I were prepared by mixing unsaturated polyester resin and silica particles as shown in Table 2 below at ambient temperature. The mixture was ground with a cowl blade on a high shear dispersing equipment (Dispermat) at a shear rate of 200-400 s⁻¹ for at least 10 minutes to achieve a grind below 45 µm. Then the remaining ingredients were added following the order as listed in Table 2 and mixed at a shear rate of 30-60 s⁻¹ for another 5 minutes or with a speed-mixer until the composition was homogenous. The composition was kept in a glass jar with sealed lid and left undisturbed until the rheology test the next day.

**Table 2. Solvent-borne unsaturated polyester-based formulation examples for synergist evaluation**

| | Coating Composition | | | | | | | | |
|---|---|---|---|---|---|---|---|---|---|
| Component | A | B | C | D | E | F | G | H | I |
| Unsaturated polyester Resin [g] | 105.75 | 105.75 | 105.75 | 105.75 | 105.75 | 105.75 | 105.75 | 105.75 | 105.75 |
| Silica [g] | 6.75 | 6.75 | 6.75 | 6.75 | 6.75 | 6.75 | 6.75 | 6.75 | 6.75 |
| Unsaturated polyester Resin [g] | 60.00 | 60.00 | 60.00 | 60.00 | 60.00 | 60.00 | 60.00 | 60.00 | 60.00 |
| Styrene [g] | 52.50 | 52.50 | 52.50 | 52.50 | 52.50 | 52.50 | 52.50 | 52.50 | 52.50 |
| Synergist S1 [g] | | | 0.68 | | | | | | |
| Synergist S2 [g] | | | | 0.68 | | | | | |
| Synergist S3 [g] | | | | | 0.68 | | | | |
| Synergist S4 [g] | | | | | | 0.68 | | | |
| Synergist S8 [g] | | | | | | | 0.68 | | |
| Synergist S9 [g] | | | | | | | | 0.68 | |
| Synergist S10 [g] | | | | | | | | | 0.68 |
| Synergist S14 [g] | | 0.68 | | | | | | | |

The unsaturated polyester resin is an isophthalic acid derived unsaturated polyester Resin (AOC Resins). Hydrophilic fumed silica with a specific surface area of 175-225 m²/g (Evonik) was used.

Synergist S14 is a commercially available synergist polymer composed of a solution of polyhydroxycarboxylic acid amides without alkylene oxide units.

### Example 15 - Rheology testing of solvent-borne unsaturated polyester coating composition

Synergists S1, S2, S3, S4, S8, S9, S10 and S14 were tested in a solvent-borne unsaturated polyester coating compositions B to I containing silica particles. Critical performance indicators for the synergists are low-shear viscosity of the coating composition as well as the time required for sufficient viscosity rebound after shear stress.

Solvent-borne unsaturated polyester coating composition A only contained silica particles but no synergist polymer.

The rheology of coating compositions A-I was tested with a rotational rheometer (Anton Paar 302). The rheology test was performed the next day (noted as day 1) after formulations were prepared and rested overnight, and after 14 days of storage at 25 °C. A standard parallel plate spindle with a diameter of 25 mm was used for the measurement. The spindle was brought toward formulation sample right after sample loading, with 1 mm gap and temperature control of rheometer plate set at 25 °C.

To evaluate thixotropy, a four-step shear test was developed. All samples were first held at low shear rate (0.01 s⁻¹) for 120 seconds to reach a steady state to replicate the sample near rest behavior, followed by ramp up shear rate from 0.01 s⁻¹ up to 50 s⁻¹ (logarithmic profile) over 200 seconds to replicate the breakdown of sample's structure. In the third step, it was held at constant high shear rate (50 s⁻¹) for 60 seconds and reach another steady state, and then it was returned to the same low share rate (0.01 s⁻¹) as applied in step one for the sample to recover and rebuild structure. Shear stress versus shear rate was recorded, Viscosity (η) function was calculated over time. The time it takes for sample viscosity to recover to 90% of its initial viscosity was used as a measure of thixotropy, while a shorter recovery time indicates a faster structure rebuilt within the coating composition.

**Table 3: Viscosity of coating compositions A to I after 1 day and after 14 days and the respective recovery time to 90% of viscosity after a four-step shear test.**

| Coating Composition | Day 1 | | Day 14 | |
|---|---|---|---|---|
| | Initial viscosity (Pa.s) | Recovery time (s) | Initial viscosity (Pa.s) | Recovery time (s) |
| A | 145 | 29 | 154 | 25 |
| B | 400 | 57 | 570 | 60 |
| C | 386 | 15 | 757 | 17 |
| D | 338 | 13 | 654 | 7 |
| E | 416 | 20 | 811 | 21 |
| F | 205 | 25 | 313 | 30 |
| G | 431 | 4 | 645 | 8 |
| H | 212 | 11 | 279 | 15 |
| I | 848 | 10 | 753 | 7 |

The initial viscosity on day 1 and day 14 was determined at 0.01 s⁻¹ (Pa.s). Recovery time is the time it takes for the coating sample to recover to 90% of its initial viscosity after the four-step shear test described above.

For the unsaturated polyester coating composition used an initial viscosity of 250 Pa.s or lower depicts poor sag behaviour. An initial viscosity in the area of 300 Ps.s or higher depicts good sag behaviour.

If the initial viscosity on Day 1 is less than 250 Pa.s the coating composition is not suitable for commercial use even if it increases slighty after 14 days storage.

Table 3 shows the initial viscosity of coating compositions A to I after 1 day and after 14 days storage as well as the time it takes for these compositions to recover 90% of its initial viscosity after a four-step shear test.

Coating composition A serves as control and only comprises silica particles as rheology modifier but no additional synergist to improve rheology behaviour. The low initial viscosity of 145 Pa.s indicates poor sag behaviour.

Coating composition B comprising the commercially available synergist polymer S14 shows high initial viscosity of 400 Pa.s after 1 day and 570 Pa.s after 14 days indicating good sag behaviour. However, for a coating to be suitable for use not only a high initial viscosity is required but also a fast recovery time to rebound to the initial viscosity after exposure to shear stress. The recovery time of coating composition B after the shear test is 57 seconds and 60 seconds respectively. Such a long recovery time will result in poor sag behaviour when the coating is applied to a surface.

Coating composition C comprising synergist S1 according to the present invention also shows a high initial viscosity of 386 Pa.s after 1 day and 757 Pa.s after 14 days. In addition to the high initial viscosity coating composition C exhibits a much shorter recovery time than coating compositions A and B. The recovery time of coating composition C after the shear test is 15 seconds and 17 seconds respectively. The combination of high initial viscosity and short recovery time will result in good sag behaviour when the coating is applied to a surface.

Coating composition D comprising synergist S2 according to the present invention also shows a high initial viscosity of 338 Pa.s after 1 day and 654 Pa.s after 14 days. In addition to the high initial viscosity coating composition D also exhibits a much shorter recovery time than coating compositions A and B. The recovery time of coating composition D after the shear test is 13 seconds and 7 seconds respectively. The combination of high initial viscosity and short recovery time will result in good sag behaviour when the coating is applied to a surface.

Coating composition E comprising synergist S3 according to the present invention also shows a high initial viscosity of 416 Pa.s after 1 day and 811 Pa.s after 14 days. In addition to the high initial viscosity coating composition E also exhibits a much shorter recovery time than coating compositions A and B. The recovery time of coating composition E after the shear test is 20 seconds and 21 seconds respectively. The combination of high initial viscosity and short recovery time will result in good sag behaviour when the coating is applied to a surface.

Coating composition F comprising synergist S4 is a comparative example. Synergist S4 was produced using a polyether diamine with no ethylene oxide unit as component B and is therefore not falling under the scope of the invention. The thickening effect of the synergist is unsatisfactory. Coating composition F has an initial viscosity of only 205 Pa.s after 1 day and 313 Pa.s after 14 days. The sag behaviour will be poor because of low viscosity despite the short recovery time.

Coating composition G comprising synergist S8 according to the present invention shows a high initial viscosity of 431 Pa.s after 1 day and 645 Pa.s after 14 days. In addition to the high initial viscosity coating composition G also exhibits a much shorter recovery time than coating compositions A and B. The recovery time of coating composition G after the shear test is 4 seconds and 8 seconds respectively. The combination of high initial viscosity and short recovery time will result in good sag behaviour when the coating is applied to a surface

Coating composition H comprising synergist S9 is a comparative example. Synergist S9 was produced using a polyether diamine with no ethylene oxide unit as component B and is therefore not falling under the scope of the invention. The thickening effect of the synergist is unsatisfactory. Coating composition H has an initial viscosity of only 212 Pa.s after 1 day and 279 Pa.s after 14 days. The sag behaviour will be poor because of low viscosity despite the short recovery time.

Similar to coating compositions C, D, E and G, coating composition I comprising synergist S10 according to the present invention also shows a high initial viscosity of 848 Pa.s after 1 day and 753 Pa.s after 14 days. In addition to the high initial viscosity, coating composition I also exhibits a much shorter recovery time than coating compositions A and B. The recovery time of coating composition I after the shear test is 10 seconds and 7 seconds respectively. The combination of high initial viscosity and short recovery time will result in good sag behaviour when the coating is applied to a surface.

### Example 16 - Preparation of solvent based acrylic polyol 2KPU coating composition

Solvent based acrylic polyol 2KPU coating compositions J, K and L were prepared by mixing acrylic polyol with butyl acetate and silica particles (as shown in Table 4 below) at ambient temperature. The mixture was mixed on a high shear dispersing equipment at a shear rate of 2500 rpm for 5 minutes and further ground to achieve a grind below 20 µm with a Skandex disperser for 60 mins, in presence of 200 g of 3mm glass beads as grinding aid. With the glass beads filtered, the remaining ingredients, except hardener, were added following the order as listed in Table 4 and mixed at a shear rate of 500 rpm with a paddle stirrer for another 5 minutes. The composition was kept in a glass jar with sealed lid and left undisturbed until addition of hardener the next day. Hardener was added to the composition at 1000 rpm shear rate and mixed for 1 minute at 23 °C. Rheology test was conducted 10 minutes later.

**Table 4. Solvent-borne acrylic polyol 2KPU coating composition formulation examples for synergist evaluation.**

| | Coating Composition | | |
|---|---|---|---|
| Component | J | K | L |
| Acrylic polyol [g] | 23.3 | 23.3 | 23.3 |
| Butyl acetate [g] | 8.5 | 8.5 | 8.5 |
| Silica [g] | 1.0 | 1.0 | 1.0 |
| Synergist S1 [g] | | 0.15 | |
| Synergist S14 [g] | | | 0.15 |
| Acrylic polyol [g] | 33.4 | 33.4 | 33.4 |
| Xylene [g] | 3.9 | 3.9 | 3.9 |
| Ethoxypropyl acetate [g] | 3.5 | 3.5 | 3.5 |
| Butylglycol acetate [g] | 1.5 | 1.5 | 1.5 |
| Butyl acetate [g] | 3.9 | 3.9 | 3.9 |
| Polyisocyanate harderner [g] | 21.3 | 21.3 | 21.3 |

The acrylic polyol resin (Allnex) is a hydroxy functional resin designed for crosslinking with polyisocyanate harderner. The polyisocyanate hardener (Evonik) reacts with the acrylic polyol over time to form a thermoset coating. Hydrophilic fumed silica with a specific surface area of 175-225 m²/g (Evonik) was used.

Synergist S14 is a commercially available synergist polymer composed of a solution of polyhydroxycarboxylic acid amides without alkylene oxide units.

### Example 17 - Rheology testing of solvent-borne acrylic polyol 2KPU coating composition

Synergists S1 and S14 were tested in a solvent-borne acrylic polyol 2KPU coating composition K to L containing silica particles. Critical performance indicators for the synergists are low-shear viscosity of the coating composition as well as the time required for sufficient viscosity rebound after shear stress.

Solvent-borne acrylic polyol 2KPU coating composition J only contained silica particles but no synergist polymer.

The rheology of coating compositions J, K and L was tested with a rotational rheometer (Anton Paar 302). The rheology test was performed 10 minutes after addition of polyisocyanate hardener. A standard parallel plate spindle with a diameter of 25 mm was used for the measurement. The spindle was brought toward formulation sample right after sample loading, with 1 mm gap and temperature control of rheometer plate set at 23 °C. The initial viscosity of the samples was measured at low shear rate at (0.1 s⁻¹) for 60 seconds. High shear rate of 500 s⁻¹ was then applied for 120 seconds to replicate the breakdown of sample's structure, followed by lower shear rate of 0.5 s⁻¹ for the sample to recover and rebuild structure. Shear stress versus shear rate was recorded, Viscosity (η) function was calculated over time. The time it takes for sample viscosity to recover to 90% of its initial viscosity was used as a measure of thixotropy, while a shorter recovery time indicates a faster structure rebuilt within the coating composition.

**Table 5: Initial viscosity of coating compositions J to L measured at 0.1 s⁻¹ and the respective recovered viscosity measured at 0.5 s⁻¹, after 30s of recovery.**

| Coating Composition | Initial viscosity (mPa.s) | Viscosity after 30s of recovery (mPa.s) |
|---|---|---|
| J | 200 | 200 |
| K | 4000 | 400 |
| L | 3600 | 280 |

Coating composition J serves as control and only comprises silica particles as rheology modifier but no additional synergist to improve rheology behaviour. The low initial viscosity of 200 mPa.s indicates poor sag behaviour

Coating composition L comprising the commercially available synergist polymer S14 shows high initial viscosity of 3600 mPa.s. However, for such coating to be suitable for use not only a high initial viscosity is required but also a quick viscosity recovery after exposure to shear stress. The viscosity of coating composition L, 30s after the shear test, is 280 mPa.s, which is only marginally higher than the control J and hence still present poor sag property.

Coating composition K comprising synergist S1 according to the present invention also shows a high initial viscosity of 4000 mPa.s. In addition to the high initial viscosity coating composition K exhibits stronger viscosity recovery than coating compositions J and L. The viscosity of coating composition K, 30s after the shear test, is 400 mPa.s. The combination of high initial viscosity and quick viscosity recovery results in good sag behaviour when the coating is applied to a surface.

## Claims

1. Organic polymer of the following structure I
(AₘBₙ)-(C)ₓ (I)
in which A is a polycarboxylic acid with two or more carboxylic groups or its anhydrides, esters or acid halides and mixtures thereof, B is polyamine with two or more amine groups, m, n and x are molar ratios with m ≥ 1, n ≥ 1 and x = 2-6; C has the following structure II
F(D)_{y} (II)
in which F is a urethane, amide and/or ester functional group, D is a C₂ to C₁₈ moiety with at least one primary, secondary and/or tertiary hydroxyl group(s) and y = 1-6, **characterized in that** AₘBₙ is a polyetheramide that comprises 3 or more alkylene oxide units and 1 or more ethylene oxide units.

2. Organic polymer according to claim 1, **characterized in that** A is an aliphatic or aromatic polycarboxylic acid with two or three carboxylic groups or their anhydrides, esters or acid halides and mixtures thereof.

3. Organic polymer according to claim 2, **characterized in that** A is an aliphatic or aromatic polycarboxylic acid with two carboxyl groups selected from the group consisting of oxalic acid, diethyl oxalate, oxalyl chloride, succinic acid, succinic anhydride, oct(en)yl-, dec(en)yl- and dodec(en)ylsuccinic anhydride, fumaric acid, diethyl fumarate, maleic acid, maleic anhydride, diethyl maleate, glutaric acid, glutaric anhydride, adipic acid, adipic anhydride, diglycolic acid, pimelic acid, suberic acid, azelaic acid, sebacic acid, decanedicarboxylic acid, dimerized fatty acids, mesaconic acid, malonic acid, itaconic acid, itaconic anhydride, citraconic acid, citraconic anhydride, hexahydro-, tetrahydro-, dihydro-, methylhexahydro- and methyltetrahydrophthalic acid, hexahydro-, tetrahydro-, dihydro-, methylhexahydro- and methyltetrahydrophthalic anhydride, 1,4- cyclohexanedicarboxylic acid, tetrahydrophthalic acid, phthalic acid, phthalic anhydride, isophthalic acid, terephthalic acid, dimethyl terephthalate, naphthalene dicarboxylic acid, naphthalene anhydride, 3,6,9-trioxaundecanedioic acid, poly(ethylene glycol) bis(carboxymethyl) ether, α,ω-Bis[2-[(3-carboxy-1-oxopropyl)amino]ethyl]-poly(ethylene glycol) and mixtures thereof.

4. Organic polymer according to claim 2, **characterized in that** A is an aliphatic or aromatic polycarboxylic acid with three carboxylic groups or their anhydrides, esters or acid halides and mixtures thereof.

5. Organic polymer according to claim 4, **characterized in that** A is selected from the group consisting of tricarballylic acid, butane tricarboxylic acid, trimesic acid, trimellitic acid, trimellitic anhydride, trimerized fatty acid (trimer acid) and mixtures thereof.

6. Organic polymer according to claim 1, **characterized in that** B is an aliphatic or aromatic polyamine with two to 6 amine groups.

7. Organic polymer according to claim 6, **characterized in that** B is an aliphatic or aromatic polyamine selected from the group consisting of ethylene diamine, propylene diamine, hexamethylene diamine, methylpentane diamine, isophorone diamine, cyclohexanediamine, xylenediamine, 4,4-diaminodicyclohexylmethane, octamethylenediamine, 1,12-dodecanediamine, dimerdiamine, trioxatridecanediamine, polyether diamine or triamine, poly(oxyethylene)diamine, poly(oxypropylene)diamine, poly(oxyethylene-oxypropylene)diamine, glyceryl poly(oxypropylene) triamine, diethylenetriamine, triaminononane, triethylenetetramine, tetraethylenepentamine, pentaethylenehexamine, bishexamethylenetriamine, bisaminopropylpiperazine and mixtures thereof.

8. Organic polymer according to claim 1, **characterized in that** C is obtained by reacting an amine reactive pre-cursor with the amine groups present in (AₘBₙ) to form (AₘBₙ)-(C)ₓ. having at least one primary or secondary or tertiary hydroxyl group.

9. Organic polymer according to claim 8, **characterized in that** the amine reactive pre-cursor is selected from the group consisting of lactic acid, glycolic acid, dimethylol propionic acid, salicylic acid, malic acid, citric acid, isocitric acid, mandelic acid, tartronic acid, tartaric acid, hydroxybutyric acid, hydroxypentanoic acid, hydroxyhexanoic acid, hydroxystearic acid, ricinoleic acid, caprolactone, valerolactone, butyrolactone, lactides, or mixtures thereof.

10. Organic polymer according to claim 8, **characterized in that** the amine reactive pre-cursor is selected from the group consisting of ethylene carbonate, propylene carbonate and glycerol carbonate.

11. Organic polymer according to claim 1, **characterized in that** C is obtained by reacting a carboxylic acid-reactive pre-cursor with the carboxyl groups present in (AₘBₙ) to form (AₘBₙ)-(C)ₓ, the pre-cursor has at least one primary or secondary or tertiary hydroxyl group.

12. Organic polymer according to claim 11, **characterized in that** the carboxylic acid-reactive pre-cursor is selected from the group consisting of diethanolamine, tris(hydroxymethyl)aminomethane, epoxy-amine adducts that have at least one secondary amine and mixtures thereof.

13. Process for producing an organic polymer according to any one of claims 1 to 12 comprising the steps of reacting A and B to forming AₘBₙ at a temperature of 140°C to 220°C for a period of 4-8 hours and reacting the thus formed AₘBₙ with a pre-cursor of C at a temperature of 140°C to 180°C for another 4-8 hours or at a temperature of 100°C to 150°C for a further 4-8 hours if the pre-cursor of C is a carbonate.

14. A solvent-based coating composition comprising an organic polymer according to any one of claims 1 to 12, a solvent-based resin system and hydrophilic or hydrophobic silica particles.

15. A solvent-based coating composition according to claim 14, **characterized in that** the solvent is selected from the group consisting of aromatic hydrocarbons and ketones.

16. A solvent-based coating composition according to claim 14 or 15, **characterized in that** the resin is selected from the group consisting of acrylic, polyurethane, polyester and epoxy resin.

17. Process for coating a surface comprising the steps of providing a coating composition according to claim 14, 15 or 16, applying said coating at least partially onto a surface and drying or curing the coating composition.
